(19) **Europäisches Patentamt / European Patent Office / Office européen des brevets**

(11) **EP 2 517 078 B1**

(12) **FASCICULE DE BREVET EUROPEEN**

(45) Date de publication et mention
de la délivrance du brevet:
**30.03.2016 Bulletin 2016/13**

(21) Numéro de dépôt: **10809006.9**

(22) Date de dépôt: **14.12.2010**

(51) Int Cl.:
*G05B 19/416* (2006.01)    *B24B 9/14* (2006.01)

(86) Numéro de dépôt international:
**PCT/FR2010/052708**

(87) Numéro de publication internationale:
**WO 2011/083234 (14.07.2011 Gazette 2011/28)**

(54) **PROCEDE D'USINAGE PAR TOURNAGE D'UNE FACE D'UN VERRE DE LUNETTES**

BEARBEITUNGSVERFAHREN ZUR BEARBEITUNG EINER SEITE EINES BRILLENGLASES

MACHINING METHOD FOR MACHINING ONE FACE OF A SPECTACLE LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2009 FR 0959328**

(43) Date de publication de la demande:
**31.10.2012 Bulletin 2012/44**

(73) Titulaire: **Essilor International (Compagnie Générale d'Optique) 94220 Charenton-le-Pont (FR)**

(72) Inventeurs:
• **MARTIN, Guillaume**
  **F-94220 Charenton-le-pont (FR)**
• **REIGNAULT, Marc**
  **F-94220 Charenton-le-pont (FR)**

(74) Mandataire: **Santarelli**
  **49, avenue des Champs-Elysées**
  **75008 Paris (FR)**

(56) Documents cités:
**EP-A1- 1 854 585    DE-A1- 19 543 184**

**EP 2 517 078 B1**

## Description

L'invention concerne un procédé d'usinage par tournage d'une surface d'un verre de lunettes à vitesse de rotation fixe.

L'invention concerne également un système de traitement de données pour exécuter un programme d'ordinateur mettant en oeuvre le procédé d'usinage et la machine d'usinage comportant ce système de traitement de données.

L'invention concerne aussi une interface de communication client-serveur pour le transfert d'un programme d'ordinateur mettant en oeuvre le procédé d'usinage vers un ordinateur distant et son exécution sur cet ordinateur, ou pour le transfert de données d'entrées et de sorties.

De manière générale, le temps d'usinage d'une surface d'un verre de lunettes dépend de la machine utilisée; du matériau et de cette surface.

La vitesse d'usinage n'est pas sans effet sur la conformité de la surface réalisée à la surface voulue. Ainsi une très faible vitesse peut permettre d'assurer la conformité d'une surface très complexe, toutefois, elle en affectera la productivité. Au contraire, une grande vitesse permet d'augmenter la productivité mais peut affecter la conformité.

En outre, la fonction optique d'un verre de lunettes est apportée principalement par deux dioptres correspondant aux surfaces avant et arrière du verre de lunettes. La topographie de la surface à réaliser dépend de la répartition de la fonction appliquée entre la surface avant et la surface arrière dudit verre. Dans certains cas, cette répartition est telle que la surface à réaliser est particulièrement complexe.

Généralement, des essais sont à mener pour les surfaces complexes afin de déterminer une vitesse d'usinage optimale, ce qui nuit à la productivité voir le document US-A1-2005/0118929. Il existe donc un besoin de déterminer simplement des paramètres d'usinage àdéquats permettant tout à la fois une bonne productivité et une bonne conformité de la surface réalisée à la surface voulue.

L'invention a ainsi pour objet, sous un premier aspect, un procédé d'usinage par tournage d'une surface d'un verre de lunettes à vitesse de rotation fixe, comportant une étape de détermination de ladite vitesse de rotation à partir de caractéristiques géométriques de ladite surface, ladite étape de détermination de la vitesse de rotation comportant lés étapes suivantes :

- déterminer une valeur représentative de la plus grande différence de valeurs géométriques de sphère moyenne sur ladite surface ; et
- déduire la vitesse de rotation de ladite valeur de la plus grande différence de valeurs géométriques de sphère moyenne sur ladite surface et d'une valeur géométrique de cylindre en un point prédéterminé de contrôle dé la vision de loin.

On observera que dans le présent document, l'expression « *valeur géométrique de sphère moyenne* » Sph en un point d'une surface est donnée par la relation suivante :

$$Sph = k \times \left( \frac{1}{R1} + \frac{1}{R2} \right) \; ;$$

avec :

- k: une constante ;
- R1 : le rayon de courbure maximal de cette surface à ce point ;
- R2 : le rayon de courbure minimal de cette surface à ce point.

De même, l'expression « *valeur géométrique de cylindre* » Cyl est donnée par la relation suivante:

$$Cyl = l \times \left| \frac{1}{R1} - \frac{1}{R2} \right| \; ;$$

avec:

- l : une constante ;
- R1 : le rayon de courbure maximal de cette surface à ce point ;

2

- R2 : le rayon de courbure minimal de cette surface à ce point.

On observera que dans le cas où la constante $k = \dfrac{(n-1)}{2}$ et que la constante l = n-1, avec n qui serait l'indice de réfraction lumineuse du matériau du verre de lunettes, les valeurs Sph et Cyl correspondraient à la définition optique de la sphère moyenne en un point d'une surface et à la definition optique du cylindre en un point d'une surface.

Ici, dans la mesure où l'on s'intéresse à l'usinage de la surface, et donc à sa topographie, indépendamment de l'effet optique résultant de la valeur de l'indice de réfraction, l'on dispose, avec la valeur géométrique de sphère moyenne et la valeur géométrique de cylindre, de deux notions qui, tout en étant liées aux propriétés optiques de la surface, sont indépendantes de la matière du verre de lunettes et donc de l'indice réfraction du verre qui va être réellement fabriqué.

En effet, dans le procédé selon l'invention, l'on détermine la vitesse de rotation indépendamment de la matière du verre.

Par commodité, il est possible de choisir, pour les constantes k et l, respectivement la valeur 0,265 et la valeur 0,53. Les valeurs géométriques de sphère moyenne et de cylindre alors obtenues correspondraient aux valeurs d'un verre de lunette ayant un indice de réfraction n de 1,53, ce qui est une valeur courante dans la pratique.

Le procédé selon l'invention permet de déterminer la vitesse de rotation de façon particulièrement simple et commode, à partir de valeurs qu'il est possible d'obtenir par les outils de calcul standard en matière d'optique, ces outils de calculs permettant, à partir d'un fichier définissant la surface avec un nombre fini de points pour chacun desquels sont données ses coordonnées, par exemple dans un repère cartésien, la valeur moyenne de sphère et la valeur de cylindre. Lès outils standards peuvent donc, en fixant arbitrairement une valeur d'indice de réfraction, par exemple à la valeur 1,53 susmentionnée, être utilisés directement dans le procédé selon l'invention.

On observera que la plus grande différence de valeurs géométriques de sphère moyenne est une mesure représentative du plus grand gradient de sphère moyenne de la surface à réaliser et qu'il s'agit donc d'une valeur parfaitement représentative de la difficulté qu'une surface présente à être réalisée.

La prise en compte de la valeur géométrique de cylindre au point de contrôle de la vision de loin permet de tenir compte de la composante torique (s'il y en a une), qui est une autre source de difficulté d'usinage.

Ainsi, le procédé selon l'invention permet, par des calculs relativement simples, basés sur des outils conventionnels de calcul d'une surface optique, de déterminer la vitesse de rotation de la machine d'usinage.

Bien entendu, c'est sur la base d'un étalonnage, aisé à réaliser par un nombre d'essai raisonnable, que sont fixées les règles de déduction de la vitesse de rotation à partir de la valeur de la plus grande différence de valeurs géométriques de sphère moyenne et de la valeur géométrique de cylindre au point de contrôle de la vision de loin.

Les travaux effectués par les inventeurs ont d'ailleurs révélé que, de façon surprenante, cet étalonnage pouvait être exprimé sous la forme d'un tableau de correspondance relativement simple, ainsi qu'expliqué ci-après.

Selon un exemple de mise en oeuvre de l'invention, l'étape de déduire la vitesse de rotation comporte les étapes suivantes :

- déduire un niveau de difficulté intrinsèque à ladite surface à partir de la valeur de la plus grande différence de valeurs géométriques de sphère moyenne et de la valeur géométrique de cylindre, et
- sélectionner la vitesse de rotation à partir dudit niveau de difficulté et de paramètres propres à la machine de tournage utilisée.

Selon un exemple de mise en oeuvre de l'invention, ledit niveau de difficulté de difficulté intrinsèque à la surface est choisi parmi plusieurs niveaux de difficulté intrinsèque prédéterminés en fonction de plages prédéterminées de valeurs géométriques de cylindre et de plages prédéterminées de valeurs de plus grande différence de valeurs géométriques de sphère moyenne.

Ainsi, La table de correspondance de niveaux de difficulté peut avantageusement comporter un nombre limité et prédéterminé de valeurs de niveaux de difficulté.

Selon un exemple de mise en oeuvre de l'invention, l'étape de déterminer la valeur représentative de la plus grande différence de valeurs géométriques de sphère moyenne comporte l'étape de traiter les caractéristiques géométriques de ladite surface en prenant en compte des points individuels de cette surface, et en prenant en compte l'ensemble desdits points individuels.

Cette première façon de traiter le fichier de coordonnées est intéressante lorsqu'on dispose de moyens de calculs relativement puissants.

Selon un exemple de mise en oeuvre de l'invention, l'étape de déterminer la valeur représentative de la plus grande différence de valeurs géométriques de sphère moyenne comporte l'étape de traiter les caractéristiques géométriques de ladite surface en prenant en compte des portions individuelles de surface formées par un ensemble de points contigus.

Cette deuxième façon de traiter le fichier de coordonnées est intéressante lorsque les moyens de calcul ont une puissance modérée, comme c'est par exemple le cas des microprocesseurs embarqués sur les machines d'usinage. En effet, il est alors intéressant de travailler sur des portions individuelles de surface formées par un ensemble de points contigus.

Selon un exemple de mise en oeuvre de l'invention, l'étape de déterminer la valeur représentative de la plus grande différence de valeurs géométriques de sphère moyenne comporte l'étape de traiter les caractéristiques géométriques de ladite surface en prenant en compte des portions de surfaces présentant des contours circulaires, et en ce que l'étape de traiter les caractéristiques géométriques comporte les étapes suivantes :

- déterminer, à partir des points contenus dans chacune desdites portions de surface, le meilleur tore qui approxime cette portion de surface, et
- en déduire la valeur géométrique de sphère moyenne sur l'ensemble de cette portion de surface à contour circulaire.

Le cas échéant, plutôt que de prendre les points individuels du fichier de coordonnées, on travaille sur des portions de surface à contour circulaire.

Dans ce cas, on détermine le meilleur tore qui approxime chacune des portions de surface par des méthodes bien connues basées sur les polynômes de Zernike.

Selon un exemple de mise en oeuvre de l'invention, l'étape de déterminer la valeur représentative de la plus grande différence de valeurs géométriques de sphère moyenne comporte l'étape de traiter les caractéristiques géométriques de ladite surface en prenant en compte seulement une partie de la surface dont on sait qu'elle contient le plus grand gradient de sphère géométrique moyenne.

En effet, pour ce qui est du traitement de seulement une partie de la surface, l'on sait, lorsqu'il s'agit d'un verre progressif, que les variations de puissance sont modérées en périphérie au centre du verre de lunettes. Par conséquent, dans un tel verre, le plus grand gradient de valeur géométrique de sphère moyenne se trouvera dans une zone annulaire intermédiaire (ni au centre, ni en périphérie) il suffit donc de traiter cette zone annulaire intermédiaire.

De préférence, la partie de surface est située dans une zone annulaire intermédiaire, entre la périphérie et le centre de la surface.

Selon un exemple de mise en oeuvre de l'invention, l'étape de déterminer la valeur de plus grande différence de valeurs géométriques de sphère moyenne sur la dite surface comporte les étapes suivantes :

- calculer les valeurs géométriques de sphère moyenne sur la surface,
- déterminer les valeurs géométriques de sphères moyennes maximale et minimale,
- déterminer les valeurs géométriques de sphères moyennes de part et d'autre des valeurs géométriques de sphères moyennes maximale et minimale, et présentant un décalage angulaire prédéterminé par rapport à celles-ci,
- comparer les valeurs géométriques de sphère moyenne maximale et minimale aux valeurs géométriques de sphères moyennes décalées angulairement, et
- déterminer la valeur de plus grande différence des valeurs géométriques de sphère moyenne sur la dite surface.

Selon un exemple de mise en oeuvre de l'invention, le procédé comporte l'une au moins des étapes supplémentaires suivantes :

- déduire une vitesses d'avance de la machine de d'usinage à partir de la vitesse de rotation et de la matière dudit verre de lunettes, et
- déduire une profondeur de passe d'un outil de la machine d'usinage à partir de la vitesse de rotation et de la matière dudit verre de lunettes.

L'invention a aussi pour objet, sous un deuxième aspect, un système de traitement de données comportant un microprocesseur adapté à exécuter un programme d'ordinateur pour mettre en oeuvre le procédé décrit ci-dessus.

L'invention a encore pour objet, sous un troisième aspect, une machine de tournage pour réaliser une surface d'un verre de lunettes à vitesse de rotation fixe comportant le système de traitement de données décrit ci-dessus.

L'invention a enfin pour objet, sous un quatrième aspect, une interface de communication client-serveur comportant des moyens adaptés à transférer la vitesse de rotation déterminée par un programme d'ordinateur pour mettre en oeuvre le procédé tel que décrit ci-dessus, lorsque ce programme d'ordinateur est exécuté dans un système de traitement de données.

On va maintenant poursuivre l'exposé de l'invention par la description d'un exemple de réalisation, donnée ci-après à titre illustratif et non limitatif, en référence aux dessins annexés sur lesquels :

- la figure 1 représente schématiquement une machine d'usinage par tournage «free form» mettant en oeuvre un procédé d'usinage par tournage d'une face d'un verre de lunettes selon l'invention,
- la figure 2 illustre une table de correspondance (« look up table » en anglais), sous la forme graphique, de niveaux de difficultés d'usinage prédéterminés,
- la figure 3 est un schéma-blocs illustrant différentes étapes de fonctionnement du procédé selon un exemple de mise en oeuvre de l'invention,
- la figure 4 illustre, schématiquement, la surface d'un verre de lunettes échantillonnée selon une étape du procédé,
- les figure 5 et 6 sont des schéma-blocs montrant respectivement l'étape de détermination de la valeur représentative de la plus grande différence de valeur géométriques de spère moyenne sur la surface, et les étapes pour construire la table de correspondance, et
- la figure 7 montre, schématiquement, une interface de communication client-serveur comportant des moyens adaptés à transférer la vitesse de rotation déterminée par le procédé selon l'invention vers un système de traitement de données distant.

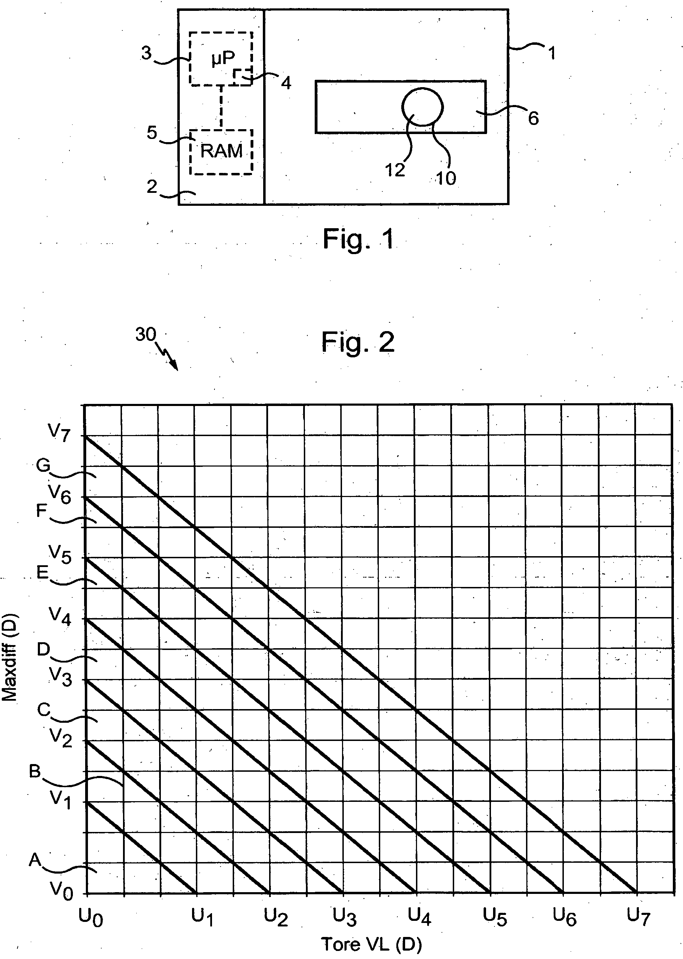

La figure 1 illustre une machine de tournage « free form » 1 à commande numérique, la commande numérique désignant l'ensemble des matériels et logiciels ayant pour fonction de donner des instructions de mouvements à tous les organes de la machine de tournage 1.

Par exemple, une telle machine est décrite dans la demande de brevet américain US 2007/0277357 A1.

Cette machine 1 est adaptée à usiner une surface 12 d'un verre 10 de lunettes, y compris une surface d'un verre progressif.

Pour cela, la machine 1 comporte un système de traitement de données 2 comportant un microprocesseur 3 muni d'une mémoire 4, notamment non volatile, lui permettant de charger et stocker un logiciel, autrement dit un programme d'ordinateur, qui, lorsqu'il est exécuté dans le microprocesseur 3, permet la mise en oeuvre d'un procédé d'usinage selon l'invention.

Cette mémoire non volatile 4 est par exemple de type ROM ("read only memory" en anglais).

Le système 2 comporte en outre une mémoire 5, notamment volatile, permettant de mémoriser des données durant l'exécution du logiciel et la mise en oeuvre du procédé.

Cette mémoire volatile 5 est par exemple de type RAM ou EEPROM (respectivement "random access memory" et "electrically erasable programmable read only memory" en anglais).

La machine 1 comporte de plus une ouverture vitrée 6 adaptée à rendre visible la surface 12 du verre 10 sur laquelle agit la machine 1.

Cette ouverture vitrée 6 permet, lors de la mise en oeuvre du procédé, à un utilisateur de cette machine 1 de surveiller le bon déroulement du procédé en visionnant le verre 10 dans la machine 1.

Pour usiner le verre 10, on a besoin de connaître précisément certain paramètres d'usinage, tels que la vitesse de rotation Vrot, la vitesse d'avance Vav, et la profondeur de passe Ppas.

Ces paramètres Vrot, Vav et Ppas sont des consignes données à la machine 1.

Pour cela, le procédé selon l'invention comporte une étape de détermination de chacun de ces paramètres.

On va maintenant décrire en référence aux figures 2 à 6 les étapes de détermination de la vitesse de rotation Vrot, de la vitesse d'avance Vav, et de la profondeur de passe Ppas selon un exemple de mise en oeuvre du procédé selon l'invention.

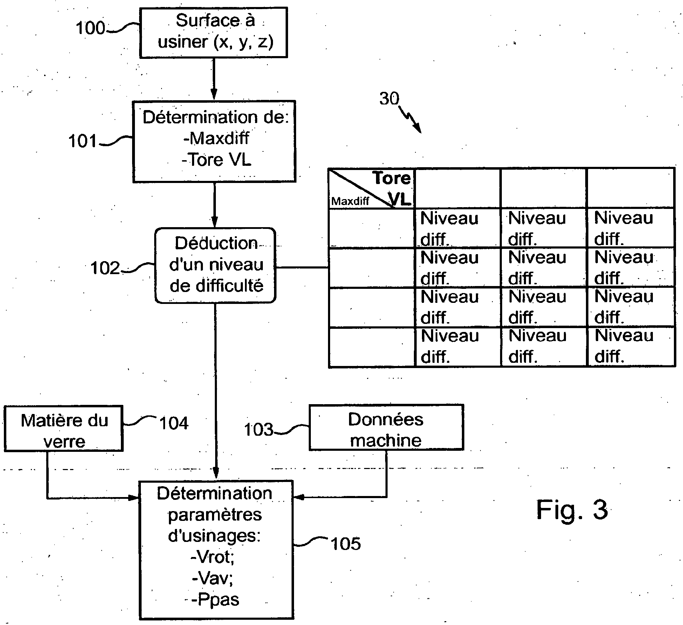

La figure 3 est un schéma-blocs des étapes permettant la détermination des paramètres ci-dessus Vrot, Vav et Ppas.

Le système de traitement de données 2 est agencé pour recevoir à l'étape 100 un fichier comportant des caractéristiques géométriques de la surface 12, sous la forme de coordonnées x, y, z, par exemple dans un repère cartésien, représentatives de ladite surface 12, en un nombre fini de points de celle-ci.

Ensuite, le système 2 caractérise la surface 12 de manière à déterminer à l'étape 101 une valeur représentative de la plus grande différence de valeurs géométriques de sphères moyennes Sph sur ladite surface 12, appelée Maxdiff, par échantillonnage de cette surface 12.

Dans l'exemple illustré, la sphère géométrique moyenne Sph en un point de la surface 12 s'exprime en dioptries et est calculée, par la relation suivante:

$$Sph = \left(\frac{n-1}{2}\right) \times \left(\frac{1}{R1} + \frac{1}{R2}\right) ;$$

avec :

- n : une constante égale à 1.53;
- R1 : le rayon de courbure maximal de la surface 12 à ce même point ;
- R2 : le rayon de courbure minimal de la surface 12 à ce même point.

Les rayons de courbure maximal et minimal, respectivement R1 et R2, sont calculés de manière connue à partir des coordonnées x, y, z reçues à l'étape 100, dans le repère cartésien, en tout point de la surface 12.

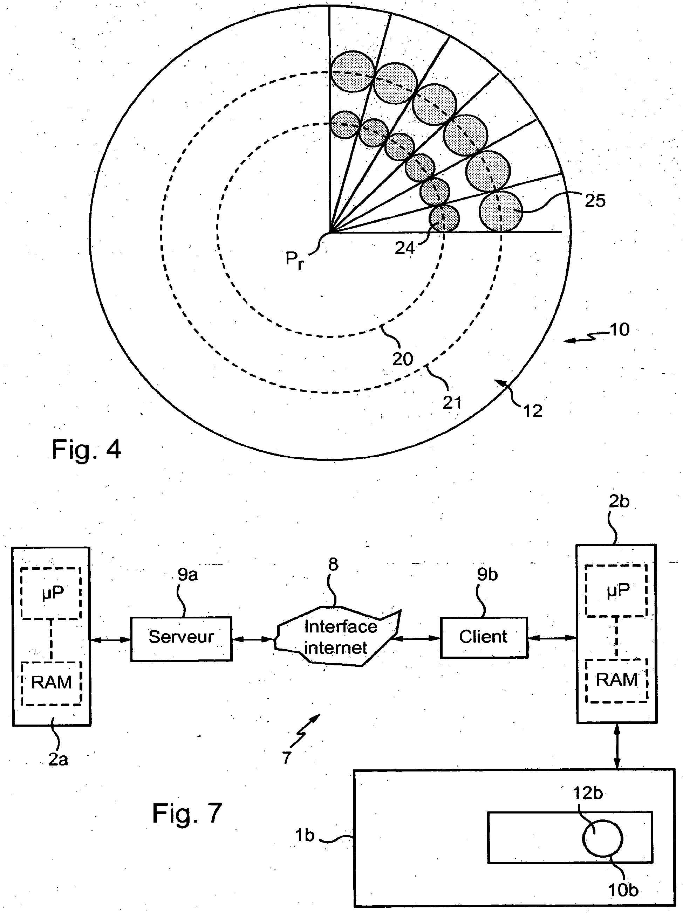

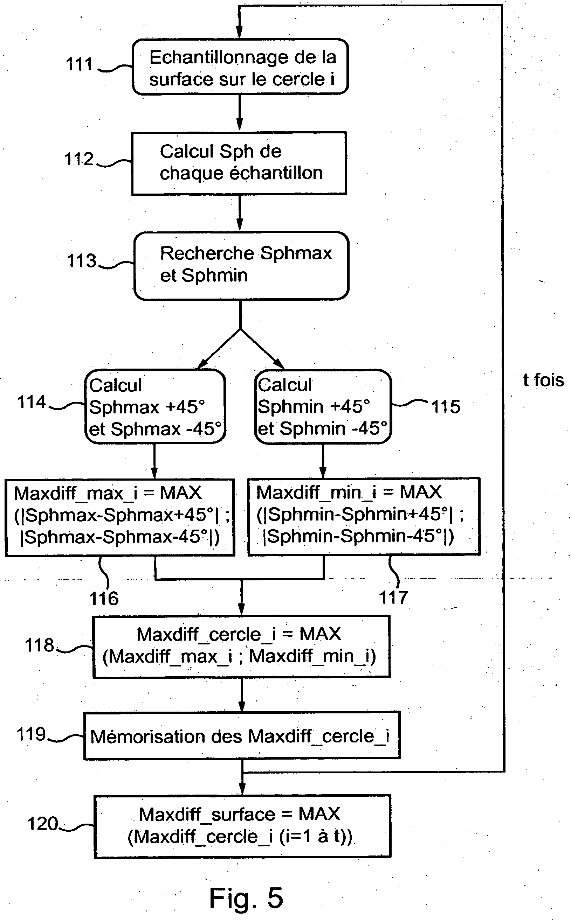

On verra par la suite en référence aux figures 4 et 5 comment on détermine la valeur Maxdiff.

Le système 2 détermine en outre, à l'étape 101, une valeur géométrique de cylindre de la surface 12 en un point de contrôle de la vision de loin sur cette surface 12, appelée Tore VL.

Le cylindre géométrique Cyl en un point de la surface 12 s'exprime en dioptrie et est calculé par la relation suivante:

$$Cyl = (n-1) \times \left| \frac{1}{R1} - \frac{1}{R2} \right| \ ;$$

avec :

- n : une constante égale à 1,53 ;
- R1 : le rayon de courbure maximal de la surface 12 à ce même point ;
- R2 : le rayon de courbure minimal de la surface 12 à ce même point.

Comme ci-dessus, les rayons de courbure maximal et minimal, respectivement R1 et R2, sont calculés de manière connue à partir des coordonnées x, y, z reçues à l'étape 100, dans le repère cartésien, en tout point de la surface 12.

Puis le système 2 déduit à l'étape 102 un niveau de difficulté intrinsèque à la surface 12 à partir de la valeur Maxdiff de plus grande différence de valeurs géométriques de sphères moyennes Sph sur la surface 12, et de la valeur géométrique de cylindre Tore VL de ladite surface 12.

Ce niveau de difficulté intrinsèque à la surface 12 est sélectionné dans une table de correspondance 30, visible sous la forme d'un graphique à la figure 2 et sous la forme d'une matrice à la figure 3. construit préalablement et mémorisé dans le système 2, cette table de correspondance 30 contenant une pluralité de valeurs de niveau de difficulté intrinsèque associées à différentes plages prédéterminées de valeurs $v_0$ à $v_7$ de Maxdiff et $u_0$ à $u_7$ de Tore VL.

Les valeurs $v_0$ à $v_7$ de Maxdiff et $u_0$ à $u_7$ de Tore VL sont exprimées en dioptries et correspondent respectivement aux ordonnées et aux abscisses de ladite table de correspondance 30.

On distingue sept niveaux de difficulté, respectivement référencés de A à G, et représentatif d'un niveau de difficulté de plus en plus élevé.

La table de correspondance 30 comporte des seuils de niveaux de difficultés A à G représentés par des droites ayant une pente négative, chacune de ces droites correspondant à la limite entre deux niveaux de difficulté successifs.

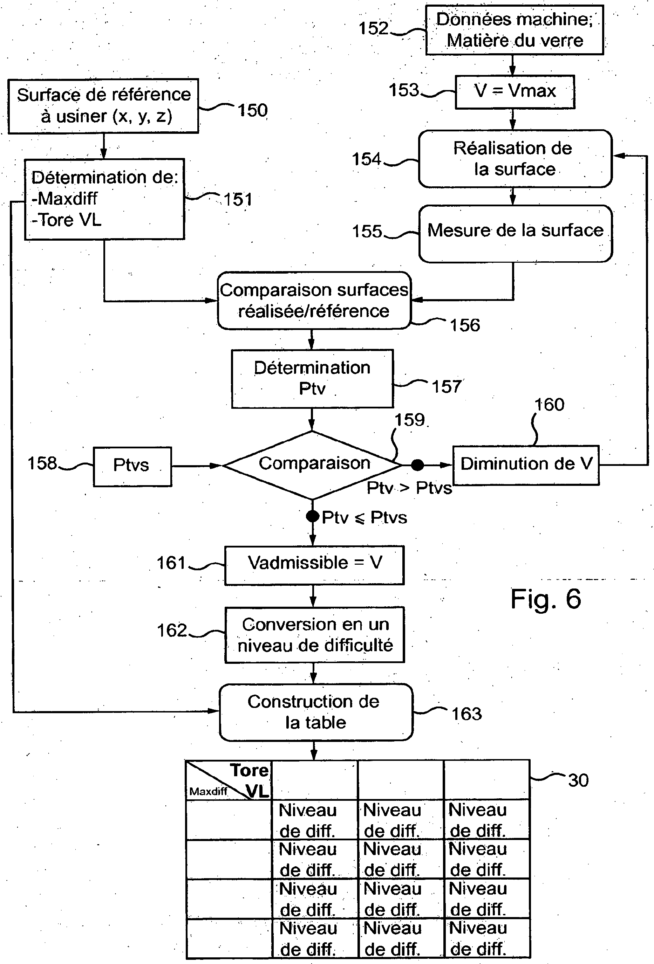

On verra par la suite en référence à la figure 6 comment est construite cette table de correspondance 30.

Le système 2 obtient aux étapes 103 et 104, respectivement des paramètres propres à la machine utilisée 1, et la matière dans laquelle est fait le verre 10.

La machine 1 est caractérisée par des données concernant un générateur qu'elle comporte.

Le système 2 détermine ensuite à l'étape 105 les paramètres d'usinages suivant :

- la vitesse de rotation Vrot à partir du niveau de difficulté A-G et du générateur de la machine 1,
- la vitesse d'avance Vav à partir de la vitesse de rotation Vrot et de la matière du verre 10, et
- la profondeur de passe Ppas à partir de la vitesse de rotation Vrot et de la matière du verre 10.

Le système 2 obtient donc à cette étape 105, de manière simple et rapide, les paramètres d'usinage ci-dessus Vrot, Vav et Ppas nécessaires à l'usinage de la surface 12 pour obtenir le verre progressif 10.

Ainsi, le procédé d'usinage peut se poursuivre et la machine 1 peut réaliser très précisément ladite surface 12.

La figure 4 montre comment le système 2 choisit de traiter seulement une partie de la surface 12 dont on sait qu'elle contient le plus grand gradient de sphère géométrique moyenne.

Cette partie de surface 12 comporte deux cercles 20 et 21 concentriques centrés sur un point de référence prisme Pr de la surface 12 correspondant au centre de rotation du verre 10 dé lunettes rapport à un repère d'usinage de la machine 1.

Ces deux cercles concentriques 20 et 21 sont situés entre la périphérie et le centre du verre de lunettes 10.

Sur ces cercles 20 et 21 sont représentées des pastilles circulaires 24 et 25 sur lesquelles le système 2 va travailler.

Chaque pastille 24, 25 est tangente aux pastilles 24, 25 entre lesquelles elle se trouve sur le cercle 20, 21.

Les pastilles 24, 25 sur un même cercle 20, 21 présentent le même diamètre.

Par exemple, le cercle 20 a un diamètre de 17,5mm et 24 pastilles de 4mm sont disposées sur ce cercle 20 pour satisfaire à un pas d'échantillonnage de 15°.

Le cercle 21, quant à lui, a un diamètre de 25mm et 24 pastilles de 6mm sont disposées sur ce cercle 21 pour satisfaire au même pas d'échantillonnage.

La figure 5 est un schéma-blocs des étapes permettant la détermination de la valeur de Maxdiff sur la surface 12, pour un nombre t de cercles sur la surface 12, ici t=2.

Pour déterminer la valeur de Maxdiff sur la surface 2, le système 2 mesure des différences de valeurs géométriques de sphère moyenne sur chacun des cercles 20 et 21.

Pour cela, le système 2 caractérise à l'étape 111 la surface 12 par le biais d'un premier cercle 20, comme vu précédemment, de manière à obtenir une série de pastilles 24.

Chaque pastille 24 correspond à un nuage de points individuels présentant des coordonnées, desquelles on déduit, par des méthodes bien connues basées sur les polynômes de Zernike, le meilleur tore qui approxime cette pastille 24.

A partir de ce meilleur tore, le système 2 calculé à l'étape 112 les valeurs géométriques de sphère moyenne Sph de chaque pastille 24.

Puis le système 2 recherche sur le cercle 20, à l'étape 113, les pastilles 24 ayant respectivement des valeurs géométriques de sphères moyenne maximale Sphmax et minimale Sphmin.

Ensuite, à l'étape 114, le système 2 calcule les valeurs géométriques de sphère moyenne Sphmax+45° et Sphmax-45° de pastilles 24 situées sur un intervalle de 45° de part et d'autre de la pastille 24 ayant respectivement la valeur géométrique de sphère moyenne maximale Sphmax.

Parallèlement, à l'étape 115, le système 2 calcule les valeurs géométriques de sphère moyenne Sphmin+45° et Sphmin-45° de pastilles 24 situées sur un intervalle de 45° de part et d'autre de la pastille 24 ayant respectivement la valeur géométrique de sphère moyenne minimale Sphmin.

Le système 2 compare ensuite, respectivement aux étapes 116 et 117, les valeurs géométriques de sphère moyenne Sphmax+45° et Sphmax-45° à la valeur géométrique de sphère moyenne maximale Sphmax, et les valeurs géométriques de sphère moyenne Sphmin+45° et Sphmin-45° à la valeur géométrique de sphère moyenne minimale Sphmin.

A ces mêmes étapes 116 et 117, le système 2 détermine respectivement les valeurs de plus grandes différences Maxdiff_max_1 et Maxdiff_min_1 desdites valeurs géométriques de sphères moyennes sur le cercle 20.

Puis, à l'étape 118, le système 2 compare les deux valeurs Maxdiff_max_1 et Maxdiff_min_1 et détermine la plus grande valeur Maxdiff_cercle_1 desdites deux valeurs.

Cette valeur Maxdiff_cercle_1, représentative de la plus grande différence de valeurs géométriques de sphère moyenne sur le cercle 20 (dit cercle N°1), est mémorisée à l'étape 119, par exemple dans la mémoire 5 du système 2.

Ensuite, les mêmes étapes 111 à 119 sont exécutées pour le cercle 21 (dit cercle N°2) de manière à obtenir une valeur Maxdiff_cercle_2, représentative de la plus grande différence de valeurs géométriques de sphère moyenne sur ledit cercle 21.

Bien entendu, ces étapes sont répétées t fois.

Enfin, à l'étape 120, le système 2 compare les valeurs Maxdiff_cercle_1 et Maxdiff_cercle_2 et détermine la plus grande valeur Maxdiff_surface sur la surface 12, représentative de la plus grande différence des valeurs géométriques de sphère moyenne sur la surface 12 à réaliser par usinage.

La figure 6 est un schéma-blocs des étapes permettant la construction de la table de correspondance de niveaux de difficulté 30, mémorisée dans la mémoire 4 du système 2.

Cette table de correspondance peut être construite directement par le système 2 ou préalablement par un autre système de traitement de données et chargée dans la mémoire 4 du système 2.

Pour construire la table de correspondance de niveaux de difficulté 30, on choisit, à une étape 150, une surface de référence et on en obtient un fichier de coordonnées x, y, z, dans un repère cartésien.

Les coordonnées de la surface 12 permettent d'en déterminer, à l'étape 151, comme vu précédemment à l'étape 101 du procédé selon l'invention, des valeurs géométriques de sphère moyenne Maxdiff et de cylindre au point de contrôle de la vision de loin Tore VL.

A une étape 152, on obtient des paramètres propres d'une machine d'usinage, et notamment sur le générateur qu'elle comporte et ses gammes d'usinage, ainsi que des données sur la matière utilisée pour le verre de lunettes 10.

Puis, à l'étape 153, on choisit comme vitesse initiale pour usiner la surface, la vitesse maximale dans la gamme de vitesse de la machine, laquelle gamme est choisie en fonction de la matière du verre.

A l'étape 154, la machine réalise la surface de référence choisie.

Ensuite, on mesure la surface réalisée à l'étape 155 en obtenant des coordonnées en tout point de cette surface.

Puis on procède, à l'étape 156, à la comparaison entre les coordonnées de la surface de référence choisie et les coordonnées de la surface réalisée, comparaison à partir de laquelle on déduit une surface dite résiduelle.

Cette surface résiduelle est générée par des erreurs de poursuite de la machine de tournage 1 lorsqu'elle usine la surface du verre progressif de lunettes.

On détermine ainsi à l'étape 157 une valeur d'un écart « peak to valley » Ptv représentatif de variations d'altitudes de la surface résiduelle.

On compare ensuite à une étape 159 la valeur de l'écart « peak to valley» déterminée Ptv à une valeur seuil d'écart « peak to valley» Ptvs obtenue à une étape 158.

Si la comparaison résulte en une valeur Ptv supérieure à la valeur Ptvs, la vitesse choisie ne fait pas partie de la plage admissible de vitesses et il faut diminuer la vitesse d'usinage à une étape 160, et donc usiner à nouveau une surface, la mesurer et la comparer (étapes 154 à 159).

Si la comparaison résulte en une valeur Ptv inférieure à la valeur Ptvs, la vitesse choisie ne fait pas partie de la plage admissible de vitesses et on en déduit la vitesse de rotation maximale admissible à une étape 161.

On convertit ensuite à l'étape 162 cette vitesse maximale en un niveau de difficulté, allant de A à G.

La valeur de Ptvs correspond au seuil de passage d'un niveau de difficulté à un autre.

Autrement dit, cette valeur de Ptvs correspond aux droites de pentes égales et négatives, dite iso Ptv, vues précédemment à la figure 2.

On peut ainsi construire et compléter la table de correspondance 30 à une étape 163 en attribuant un niveau de difficulté au couple formé par la valeur de Maxdiff et la valeur de Tore VL, jusqu'à obtenir une table de correspondance complète 30.

La figure 7 illustre une interface de communication client-serveur 7 comportant un côté dit fournisseur 9a et un autre côté dit client 9b, ces deux côtés communicant via une interface internet 8.

Le côté fournisseur comporte un serveur 9a relié à un système de traitement de données 2a du même type que celui de la figure 1, mais cette fois ci non intégré à une machine de tournage, ce serveur 9a étant adapté à communiquer avec l'interface internet 8.

Le côté client 9b est adapté à communiquer avec l'interface internet 8, et est relié à un système de traitement de données 2b du même type que celui du côté fournisseur.

En outre, le système de traitement de données 2b côté client est relié à une machine de tournage 1b du même type que celle de la figure 1 pour réaliser une surface 12b d'un verre progressif de lunettes 10b.

Le système 2b est adapté à recevoir, côté client, un fichier de coordonnées caractéristiques de la géométrie de la surface 12b à réaliser, des données caractéristiques de paramètres propres à la machine de tournage 1b utilisée, ainsi que des données caractéristiques de la matière du verre 10b utilisé.

Ce système 2b, envoie par l'intermédiaire de l'interface internet 8 et du serveur 9a, ces données au système de traitement de données 2a côté fournisseur pour la détermination de la vitesse de rotation, de la vitesse d'avance et de la profondeur de passe.

Ce système 2a exécute le programme d'ordinateur qu'il contient pour mettre en oeuvre le procédé selon l'invention et ainsi déduire les paramètres d'usinage que sont la vitesse de rotation, la vitesse d'avance et la profondeur de passe, pour usiner la surface 12b du verre 10b.

Le système 2a envoie, par l'intermédiaire du serveur 9a et de l'interface internet 8 ces paramètres d'usinage déterminés au système de traitement de données 2b côté client.

Ce système 2b est adapté à exécuter un logiciel pour la mise en oeuvre d'un procédé d'usinage du verre 10b, en utilisant les paramètres reçus, afin de réaliser la surface optique complexe 12b sur le verre 10b.

De nombreuses variantes sont possibles en fonction des circonstances.

Par exemple le micro processeur peut être remplacé par un microcontrôleur.

L'interface de communication pourrait permettre la communication via un autre réseau que le réseau internet.

L'interface de communication 8 pourrait aussi permettre de transférer l'ensemble du programme d'ordinateur vers le système de traitement de données distant 2b pour la mise en oeuvre du procédé dans la machine de tournage 1 b.

## Revendications

1. Procédé d'usinage par tournage d'une surface (12) d'un verre de lunettes (10) à vitesse de rotation (Vrot) fixe, comportant une étape de détermination de ladite vitesse de rotation (Vrot) à partir de caractéristiques géométriques (x, y, z) de ladite surface (12), **caractérisé en ce que** l'étape de détermination de la vitesse de rotation (Vrot) comporte les étapes suivantes :

   - déterminer (102) une valeur (Maxdiff) représentative de la plus grande différence de valeurs géométriques de sphère moyenne (Sph) sur ladite surface (12) ; et

- déduire (107) la vitesse de rotation (Vrot) de ladite valeur (Maxdiff) de la plus grande différence de valeurs géométriques de sphère moyenne (Sph) sur ladite surface (12) et d'une valeur géométrique de cylindre (Tore VL) en un point prédéterminé de contrôle de la vision de loin.

2. Procédé selon la revendication 1, **caractérisé en ce que** l'étape de déduire la vitesse de rotation (Vrot) comporte les étapes suivantes :

- déduire (103) un niveau de difficulté intrinsèque (A-G) à ladite, surface (12) à partir de la valeur (Maxdiff) de la plus grande différence de valeurs géométriques de sphère moyenne (Sph) et de la valeur géométrique de cylindre (Tore VL), et
- sélectionner (107) la vitesse de rotation (Vrot) à partir dudit niveau de difficulté (A-G) et de paramètres propres à la machine de tournage utilisée.

3. Procédé selon la revendication 2, **caractérisé en ce que**, ledit niveau de difficulté intrinsèque (A-G) à la surface (12) est choisi parmi plusieurs niveaux de difficulté intrinsèque (A-G) prédéterminés en fonction de plages prédéterminées de valeurs géométriques de cylindre (Tore VL) et de plages prédéterminées de valeurs (Maxdiff) de plus grande différence de valeurs géométriques de sphère moyenne (Sph).

4. Procédé selon l'une quelconque des revendications 1 à 3, **caractérisé en ce que** l'étape de déterminer la valeur (Maxdiff) représentative de la plus grande différence de valeurs géométriques de sphère moyenne (Sph) comporte l'étape de traiter les caractéristiques géométriques (x, y, z) de ladite surface (12) en prenant en compte des points individuels de cette surface (12), et en prenant en compte l'ensemble desdits points individuels.

5. Procédé selon l'une quelconque des revendications 1 à 3, **caractérisé en ce que** l'étape de déterminer la valeur (Maxdiff) représentative de la plus grande différence de valeurs géométriques de sphère moyenne (Sph) comporte l'étape de traiter les caractéristiques géométriques (x, y, z) de ladite surface (12) en prenant en compte des portions individuelles (20, 21) de surface (12) formées par un ensemble de points contigus.

6. Procédé selon l'une quelconque des revendications 1 à 3, **caractérisé en ce que** l'étape de déterminer la valeur (Maxdiff) représentative de la plus grande différence de valeurs géométriques de sphère moyenne (Sph) comporte l'étape de traiter les caractéristiques géométriques (x, y, z) de ladite surface (12) en prenant en compte des portions de surfaces (24, 25) présentant des contours circulaires, et **en ce que** l'étape de traiter les caractéristiques géométriques (x, y, z) comporte les étapes suivantes :

- déterminer, à partir des points contenus dans chacune desdites portions de surface (24, 25), le meilleur tore qui approxime cette portion de surface (24, 25), et
- en déduire la valeur géométrique de sphère moyenne sur l'ensemble de cette portion de surface (24, 25) à contour circulaire.

7. Procédé selon l'une des revendications 5 et 6, **caractérisé en ce que** l'étape de déterminer la valeur (Maxdiff) représentative de la plus grande différence de valeurs géométriques de sphère moyenne (Sph) comporte l'étape de traiter les caractéristiques géométriques (x, y, z) de ladite surface (12) en prenant en compte seulement une partie de la surface (12) dont on sait qu'elle contient le plus grand gradient de sphère géométrique moyenne.

8. Procédé selon la revendication 7, **caractérisé en ce que** la partie de surface (12) est située dans une zone annulaire intermédiaire, entre la périphérie et le centre de la surface (12).

9. Procédé selon l'une quelconque des revendications 1 à 8, **caractérisé en ce que** l'étape (102) de déterminer la valeur (Maxdiff) de plus grande différence de valeurs géométriques de sphère moyenne (Sph) sur la dite surface (12) comporte les étapes suivantes :

- calculer (113, 114) les valeurs géométriques de sphère moyenne (Sph) sur la surface (12),
- déterminer (115, 1116) les valeurs géométriques de sphère moyennes maximale (Sphmax) et minimale (Sphmin),
- déterminer (121-128) les valeurs géométriques de sphères moyennes (Sphmax+45°, Sphmax-45°, Sphmin+45°, Sphmin-45°) de part et d'autre des valeurs géométriques de sphères moyennes maximale (Sphmax) et minimale (Sphmin), et présentant un décalage angulaire prédéterminé par rapport à celles-ci,

- comparer (129-136) les valeurs géométriques de sphère moyenne maximale (Sphmax) et minimale (Sphmin) aux valeurs géométriques de sphères moyennes décalées angulairement (Sphmax+45°, Sphmax-45°, Sphmin+45°, Sphmin-45°), et

- déterminer (137-140) la valeur (Maxdiff) de plus grande différence des valeurs géométriques de sphère moyenne (Sph) sur la dite surface (12).

10. Procédé selon l'une quelconque des revendications 1 à 9, **caractérisé en ce qu'**il comporte l'une au moins des étapes supplémentaires suivantes :

- déduire (107) une vitesse d'avance (Vav) de la machine d'usinage (1) à partir de la vitesse de rotation (Vrot) et dé la matière dudit verre (10) de lunettes, et

- déduire (107) une profondeur de passe (Ppas) d'un outil de la machine d'usinage (1) à partir de la vitesse de rotation (Vrot) et de la matière dudit verre (10) de lunettes.

11. Système de traitement (2) de données comportant un microprocesseur (3) adapté à exécuter un programme d'ordinateur pour mettre en oeuvre le procédé selon l'une quelconque des revendications 1 à 10.

12. Machine de tournage pour réaliser une surface (12) d'un verre de lunettes (10) à vitesse de rotation fixe comportant un système de traitement de données (2) selon la revendication 11.

**Patentansprüche**

1. Drehbearbeitungsverfahren zur Bearbeitung einer Seite (12) eines Brillenglases (10) mit fester Drehgeschwindigkeit (Vrot), das einen Schritt des Bestimmens der Drehgeschwindigkeit (Vrot) ausgehend von geometrischen Eigenschaften (x, y, z) der Seite (12) aufweist, **dadurch gekennzeichnet, dass** der Schritt des Bestimmens der Drehgeschwindigkeit (Vrot) die folgenden Schritte aufweist:

- Bestimmen (102) eines Wertes (Maxdiff), der für die größte Differenz von geometrischen Werten der mittleren Sphäre (Sph) auf der Seite (12) repräsentativ ist; und

- Ableiten (107) der Drehgeschwindigkeit (Vrot) von dem Wert (Maxdiff) der größten Differenz von geometrischen Werten der mittleren Sphäre (Sph) auf der Seite (12) und von einem geometrischen Zylinderwert (Tore VL) an einem vorgegebenen Kontrollpunkt des Weitsehens.

2. Verfahren nach Anspruch 1, **dadurch gekennzeichnet, dass** der Schritt des Ableitens der Drehgeschwindigkeit (Vrot) die folgenden Schritte aufweist:

- Ableiten (103) eines intrinsischen Schwierigkeitsgrads (A-G) an der Seite (12) ausgehend von dem Wert (Maxdiff) der größten Differenz von geometrischen Werten der mittleren Sphäre (Sph) und von dem geometrischen Zylinderwert (Tore VL) und

- Wählen (107) der Drehgeschwindigkeit (Vrot) ausgehend von dem Schwierigkeitsgrad (A-G) und von Parametern, die der verwendeten Drehmaschine eigen sind.

3. Verfahren nach dem Anspruch 2, **dadurch gekennzeichnet, dass** der intrinsische Schwierigkeitsgrad (A-G) an der Seite (12) aus mehreren vorbestimmten intrinsischen Schwierigkeitsgraden (A-G) in Abhängigkeit von vorbestimmten Bereichen von geometrischen Zylinderwerten (Tore VL) und von vorbestimmten Bereichen von Werten (Maxdiff) der größten Differenz von geometrischen Werten der mittleren Sphäre (Sph) ausgewählt wird.

4. Verfahren nach einem der Ansprüche 1 bis 3, **dadurch gekennzeichnet, dass** der Schritt des Bestimmens des Wertes (Maxdiff), der für die größte Differenz von geometrischen Werten der mittleren Sphäre (Sph) repräsentativ ist, den Schritt des Bearbeitens der geometrischen Eigenschaften (x, y, z) der Seite (12) aufweist, indem einzelne Punkte dieser Seite (12) in Betracht gezogen werden und indem die Gesamtheit der einzelnen Punkte in Betracht gezogen wird.

5. Verfahren nach einem der Ansprüche 1 bis 3, **dadurch gekennzeichnet, dass** der Schritt des Bestimmens des Wertes (Maxdiff), der für die größte Differenz von geometrischen Werten der mittleren Sphäre (Sph) repräsentativ ist, den Schritt des Bearbeitens der geometrischen Eigenschaften (x, y, z) der Seite (12) aufweist, indem einzelne Abschnitte (20, 21) der Seite (12) in Betracht gezogen werden, die durch eine Gesamtheit von benachbarten Punkten gebildet sind.

**6.** Verfahren nach einem der Ansprüche 1 bis 3, **dadurch gekennzeichnet, dass** der Schritt des Bestimmens des Wertes (Maxdiff), der für die größte Differenz von geometrischen Werten der mittleren Sphäre (Sph) repräsentativ ist, den Schritt des Bearbeitens der geometrischen Eigenschaften (x, y, z) der Seite (12) aufweist, indem Flächenabschnitte (24, 25) in Betracht gezogen werden, die kreisförmige Konturen aufweisen, und dass der Schritt des Bearbeitens der geometrischen Eigenschaften (x, y, z) die folgenden Schritte aufweist:

- Bestimmen, ausgehend von den Punkten, die in jedem der Flächenabschnitte (24, 25) enthalten sind, des besten Torus, der mit diesem Flächenabschnitt (24, 25) approximiert, und
- das Ableiten davon des geometrischen Wertes der mittleren Sphäre (Sph) auf der Gesamtheit dieses Flächenabschnitts (24, 25) mit kreisförmiger Kontur.

**7.** Verfahren nach einem der Ansprüche 5 bis 6, **dadurch gekennzeichnet, dass** der Schritt des Bestimmens des Wertes (Maxdiff), der für die größte Differenz von geometrischen Werten der mittleren Sphäre (Sph) repräsentativ ist, den Schritt des Bearbeitens der geometrischen Eigenschaften (x, y, z) der Seite (12) aufweist, indem nur ein Teil der Seite (12) in Betracht gezogen wird, wovon bekannt ist, dass er den größten Gradienten der mittleren geometrischen Sphäre enthält.

**8.** Verfahren nach Anspruch 7, **dadurch gekennzeichnet, dass** der Teil der Seite (12) in einem ringförmigen Zwischenbereich zwischen dem Umfang und der Mitte der Seite (12) angeordnet ist.

**9.** Verfahren nach einem der Ansprüche 1 bis 8, **dadurch gekennzeichnet, dass** der Schritt (102) des Bestimmens des Wertes (Maxdiff) der größten Differenz von geometrischen Werten der mittleren Sphäre (Sph) auf der Seite (12) folgende Schritte aufweist:

- Berechnen (113, 114) der geometrischen Werte der mittleren Sphäre (Sph) auf der Seite (12),
- Bestimmen (115, 114) des maximalen (Sphmax) und des minimalen (Sphmin) geometrischen Wertes der mittleren Sphären,
- Bestimmen (121-128) der geometrischen Werte der mittleren Sphären (Sphmax+45°, Sphmax-45°, Sphmin+45°, Sphmin-45°) auf beiden Seiten des maximalen (Sphmax) und des minimalen (Sphmin) geometrischen Wertes der mittleren Sphären und die eine vorbestimmte Winkelverschiebung dazu aufweisen,
- Vergleichen (129-136) der geometrischen Werte des maximalen (Sphmax) und des minimalen (Sphmin) geometrischen Wertes der mittleren Sphären mit den geometrischen Werten der winkelversetzten mittleren Sphären (Sphmax+45°, Sphmax-45°, Sphmin+45°, Sphmin-45°) und
- Bestimmen (137-140) des Wertes (Maxdiff) der größten Differenz der geometrischen Werte der mittleren Sphäre (Sph) auf der Seite (12).

**10.** Verfahren nach einem der Ansprüche 1 bis 9, **dadurch gekennzeichnet, dass** es mindestens einen der folgenden Schritte aufweist:

- Ableiten (107) einer Vorschubgeschwindigkeit (Vav) der Bearbeitungsmaschine (1), ausgehend von der Drehgeschwindigkeit (Vrot) und von dem Material des Brillenglases (10) und
- Ableiten (107) einer Schnitttiefe (Ppas) eines Werkzeugs der Bearbeitungsmaschine (1), ausgehend von der Drehgeschwindigkeit (Vrot) und von dem Material des Brillenglases (10).

**11.** Datenverarbeitungssystem (2), das einen Mikroprozessor (3) aufweist, der geeignet ist, ein Computerprogramm auszuführen, um das Verfahren nach mindestens einem der Ansprüche 1 bis 10 durchzuführen.

**12.** Drehmaschine, um eine Seite (12) eines Brillenglases (10) mit fester Drehgeschwindigkeit zu erstellen, die ein Datenverarbeitungssystem (2) nach Anspruch 11 aufweist.

**Claims**

**1.** Machining method by turning a surface (12) of a spectacle lens (10) at a fixed rotational speed (Vrot), comprising a step of determining said rotational speed (Vrot) from geometric characteristics (x, y, z) of said surface (12), **characterized in that** the step of determining the rotational speed (Vrot) comprises the following steps:

- determining (102) a value (Maxdiff) representative of the greatest difference of mean sphere geometric values (Sph) on said surface (12); and
- deducing (107) the rotational speed (Vrot) from said value (Maxdiff) of the greatest difference in mean sphere geometric values (Sph) on said surface (12) and from a cylinder geometric value (FV torus) at a predetermined far-vision control point.

2. Method according to claim 1, **characterized in that** the step of deducing the rotational speed (Vrot) comprises the following steps:

- deducing (103) a level of intrinsic difficulty (A-G) of said surface (12) from the value (Maxdiff) of the greatest difference in mean sphere geometric values (Sph) and from the cylinder geometric value (FV torus), and
- selecting (107) the rotational speed (Vrot) from said level of difficulty (A-G) and parameters pertaining to the turning machine used.

3. Method according to claim 2, **characterized in that** said level of intrinsic difficulty (A-G) of the surface (12) is chosen from several levels of intrinsic difficulty (A-G) predetermined as a function of predetermined ranges of cylinder geometric values (FV torus) and predetermined ranges of values (Maxdiff) of greatest difference in mean sphere geometric values (Sph).

4. Method according to any one of claims 1 to 3, **characterized in that** the step of determining the representative value (Maxdiff) of the greatest difference in mean sphere geometric values (Sph) comprises the step of processing the geometric characteristics (x, y, z) of said surface (12) taking account of the individual points of this surface (12), and taking account of the whole of the said individual points.

5. Method according to any one of claims 1 to 3, **characterized in that** the step of determining the value (Maxdiff) representative of the greatest difference in mean sphere geometric values (Sph) comprises the step of processing the geometric characteristics (x, y, z) of said surface (12) taking account of the individual portions (20, 21) of surface (12) formed by a set of contiguous points.

6. Method according to any one of claims 1 to 3, **characterized in that** the step of determining the value (Maxdiff) representative of the greatest difference in mean sphere geometric values (Sph) comprises the step of processing the geometric characteristics (x, y, z) of said surface (12) taking account of the surface portions (24, 25) having circular contours, and **in that** the step of processing the geometric characteristics (x, y, z) comprises the following steps:

- determining, starting from the points contained in each of said surface portions (24, 25), the best torus that approximates to this surface portion (24, 25), and
- deducing therefrom the mean sphere geometric value over the whole of this circular contour surface portion (24, 25).

7. Method according to one of claims 5 and 6, **characterized in that** the step of determining the value (Maxdiff) representative of the greatest difference in mean sphere geometric values (Sph) comprises the step of processing the geometric characteristics (x, y, z) of said surface (12) taking account of only a part of the surface (12) which is known to contain the greatest mean sphere geometric gradient.

8. Method according to claim 7, **characterized in that** the part of the surface (12) is situated in an intermediate annular zone, between the periphery and the centre of the surface (12).

9. Method according to any one of claims 1 to 8, **characterized in that** the step (102) of determining the value (Maxdiff) of greatest difference in mean sphere geometric values (Sph) on said surface (12) comprises the following steps:

- calculating (113, 114) the mean sphere geometric values (Sph) on the surface (12),
- determining (115, 116) the maximum (Sphmax) and minimum (Sphmin) mean sphere geometric values and,
- determining (121-128) the mean sphere geometric values (Sphmax+45°, Sphmax-45°, Sphmin+45°, Sphmin-45°) on each side of the maximum (Sphmax) and minimum (Sphmin) mean sphere geometric values, having a predetermined angular offset with respect to the latter,
- comparing (129-136) the maximum (Sphmax) and minimum (Sphmin) mean sphere geometric values with the angularly-offset mean sphere geometric values (Sphmax+45°, Sphmax-45°, Sphmin+45°, Sphmin-45°), and

- determining (137-140) the value (Maxdiff) of greatest difference in the mean sphere geometric values (Sph) on said surface (12).

10. Method according to any one of claims 1 to 9, **characterized in that** it comprises at least one of the following additional steps:

- deducing (107) a feed rate (Vav) of the machine tool (1) from the rotational speed (Vrot) and from the material of said spectacle lens (10), and
- deducing (107) a depth of cut (Ppas) of a tool of the machine tool (1) from the rotational speed (Vrot) and from the material of said spectacle lens (10).

11. Data processing system (2) comprising a microprocessor (3) capable of executing a computer program for implementing the method according to any one of claims 1 to 10.

12. Turning machine for producing a surface (12) of a spectacle lens (10) at a fixed rotational speed comprising a data processing system (2) according to claim 11.

Fig. 1

Fig. 2

| 100 | Surface à usiner (x, y, z) |
|-----|---------------------------|

↓

| 101 | Détermination de: -Maxdiff -Tore VL |
|-----|--------------------------------------|

30

↓

| 102 | Déduction d'un niveau de difficulté |
|-----|-------------------------------------|

| Maxdiff \ Tore VL | | | |
|---|---|---|---|
| | Niveau diff. | Niveau diff. | Niveau diff. |
| | Niveau diff. | Niveau diff. | Niveau diff. |
| | Niveau diff. | Niveau diff. | Niveau diff. |
| | Niveau diff. | Niveau diff. | Niveau diff. |

| Matière du verre | 104 |
|------------------|-----|

| 103 | Données machine |
|-----|-----------------|

| Détermination paramètres d'usinages: -Vrot; -Vav; -Ppas | 105 |
|---------------------------------------------------------|-----|

Fig. 3

Fig. 4

Fig. 7

111 — Echantillonnage de la surface sur le cercle i

112 — Calcul Sph de chaque échantillon

113 — Recherche Sphmax et Sphmin

114 — Calcul Sphmax +45° et Sphmax -45°

115 — Calcul Sphmin +45° et Sphmin -45°

Maxdiff_max_i = MAX (|Sphmax-Sphmax+45°| ; |Sphmax-Sphmax-45°|)

Maxdiff_min_i = MAX (|Sphmin-Sphmin+45°| ; |Sphmin-Sphmin-45°|)

116

117

118 — Maxdiff_cercle_i = MAX (Maxdiff_max_i ; Maxdiff_min_i)

119 — Mémorisation des Maxdiff_cercle_i

t fois

120 — Maxdiff_surface = MAX (Maxdiff_cercle_i (i=1 à t))

# Fig. 5

Fig. 6

**EP 2 517 078 B1**